# EUROPÄISCHE PATENTANMELDUNG

(11) **EP 4 835 329 A1**
(43) Veröffentlichungstag der Anmeldung: **04.11.2026**
(21) Anmeldenummer: 26172310.0
(22) Anmeldetag: 14.04.2026
(51) Int. Cl.: F16H 61/24, F16H 59/10, G05G 5/03

(54) **VERFAHREN ZUR STEUERUNG EINES HANDBETÄTIGUNGSAKTUATORS UND EIN HANDBETÄTIGUNGSAKTUATOR**

(30) Priorität: 29.04.2025 DE 102025116476
(71) Anmelder: Dr. Ing. h.c. F. Porsche Aktiengesellschaft, 70435 Stuttgart (DE)
(72) Erfinder: Stocks, Julian Philip, 70178 Stuttgart (DE); Kühner, Manuel, 36100 Petersberg (Marbach) (DE)

(57) **Zusammenfassung**

Die Erfindung betrifft ein Verfahren zur Steuerung eines Handbetätigungsaktuators (1) eines Kraftfahrzeugs, wobei der Handbetätigungsaktuator (1) ein Aktuatorgehäuse (2) und einen Betätigungshebel (3) aufweist, wobei der Betätigungshebel (3) in dem Aktuatorgehäuse (2) verschwenkbar gelagert angeordnet ist, wobei in dem Aktuatorgehäuse (2) zumindest ein Kinematikmodul (8) angeordnet ist, welches sich einerseits an dem Betätigungshebel (3) abstützt und sich andererseits an dem Aktuatorgehäuse (2) abstützt, um die räumliche Verlagerbarkeit des Betätigungshebels (3) vorzugeben und die die Betätigungskraft zur Verlagerung des Betätigungshebels (3) definierenden Widerstandskräfte zu verursachen, wobei zumindest ein Kinematikmodul (8) anpassbar und/oder elektronisch steuerbar ist.

## Beschreibung

Die Erfindung betrifft ein Verfahren zur Steuerung eines Handbetätigungsaktuators, insbesondere eines Kraftfahrzeugs. Auch betrifft die Erfindung einen Handbetätigungsaktuator, welcher steuerbar ist.

Kraftfahrzeuge des Standes der Technik weisen oftmals beispielsweise einen Handbremshebel zum manuellen Anziehen der Handbremse, einen Schalthebel für das manuelle Schalten eines manuellen Schaltgetriebes oder einen Wählhebel für das manuelle Bedienen eines automatischen Getriebes auf. Der Handbremshebel, der Schalthebel und auch der Wählhebel werden in modernen Kraftfahrzeugen typischerweise eingespart und durch Betätigungstasten ersetzt, was Kosten einspart und durch eine automatisierte elektrische und/oder elektronische Betätigung von Feststellbremse und Getriebe erlaubt wird. Die vollautomatische Steuerung von Kraftfahrzeugen wird jedoch nicht von jedem Fahrer gewünscht, weil damit auch ein individueller Eingriff durch den Fahrer erschwert oder vermieden wird, was von manchen Fahrern bevorzugt wird. So kann eine manuelle Betätigung der Handbremse zur Unterstützung einer Kurvenfahrt, beispielsweise im Rennsport, nicht mehr vorgenommen werden, wenn die Betätigung über einen Taster vollautomatisiert erfolgt, weil das damit gesteuerte Betätigen der Handbremse typischerweise erst von der Steuerung erlaubt und durchgeführt wird, wenn das Fahrzeug steht.

Es besteht jedoch der Wunsch einer Remanualisierung von Kraftfahrzeugen, um gewisse Funktionalitäten wieder manuell durchführen zu können, wie beispielsweise die manuelle Betätigung der Hand- bzw. Feststellbremse und/oder die manuelle Betätigung des Getriebes als manuelles Schaltgetriebe und/oder die sequentielle Schaltung des automatischen Getriebes. Dabei kann mittels eines Handbetätigungsaktuators eine manuelle Betätigung erfolgen, dessen Signale des vorgesehenen zumindest einen Sensors zur elektronischen Steuerung eines automatischen Getriebes oder einer Bremse genutzt werden können, also ein shiftby-wire oder ein break-by-wire durchgeführt werden kann.

Für eine realistische Betätigung des Betätigungshebels des Handbetätigungsaktuators durch einen Fahrer eines Kraftfahrzeugs ist es wünschenswert, wenn die Verlagerung des Betätigungshebels mit Betätigungskräften verbunden ist, die typisch sind für ein Kraftfahrzeug mit einem manuellen Schaltgetriebe. Allerdings sind im Stand der Technik auch diesbezüglich unterschiedliche manuelle Schaltgetriebe bekannt, deren Betätigungskräfte ebenfalls stark variieren, so dass ein einheitliches Schaltgefühl nur schwer zu erzeugen ist.

Es ist die Aufgabe, ein Verfahren zur Steuerung eines Handbetätigungsaktuators zu schaffen, welches ein realistisches Betätigungsgefühl erlaubt. Auch ist es die Aufgabe, einen Handbetätigungsaktuator zu schaffen, welcher derart steuerbar ist, dass ein realistisches Betätigungsgefühl steuerbar ist.

Die Aufgabe zu dem Verfahren wird mit den Merkmalen von Anspruch 1 gelöst.

Ein Ausführungsbeispiel der Erfindung betrifft ein Verfahren zur Steuerung eines Handbetätigungsaktuators eines Kraftfahrzeugs, wobei der Handbetätigungsaktuator ein Aktuatorgehäuse und einen Betätigungshebel aufweist, wobei der Betätigungshebel in dem Aktuatorgehäuse verschwenkbar gelagert angeordnet ist, wobei in dem Aktuatorgehäuse zumindest ein Kinematikmodul angeordnet ist, welches sich einerseits an dem Betätigungshebel abstützt und sich andererseits an dem Aktuatorgehäuse abstützt, um die räumliche Verlagerbarkeit des Betätigungshebels vorzugeben und die die Betätigungskraft zur Verlagerung des Betätigungshebels definierenden Widerstandskräfte zu verursachen, wobei zumindest ein Kinematikmodul anpassbar und/oder elektronisch steuerbar ist. Mit diesem Verfahren lässt sich die Betätigungskraft gestalten, die benötigt wird, um den Bedienhebel zu betätigen, wobei damit eine individuelle Gestaltung möglich ist und auch verschiedene Kennlinien auswählbar sind. So kann beispielsweise die sogenannte "Knackigkeit" der Betätigung gesteuert werden, beispielsweise in unterschiedlichen Profilen, wie beispielsweise die Profile "Normal", "Sport", etc., die auswählbar sein können.

Bei einem Ausführungsbeispiel ist es auch zweckmäßig, wenn das zumindest eine Kinematikmodul oder dass mehrere Kinematikmodule derart angeordnet und ausgebildet sind, dass der Betätigungshebel als Schalthebel und/oder als Wählhebel und/oder als Bremsbetätigungshebel dient, wobei die zur Verlagerung des Betätigungshebels notwendigen Betätigungskräfte durch erzeugte Widerstandskräfte verursacht werden und/oder die räumliche Verlagerbarkeit vorgegeben wird. Damit kann der Betätigungshebel multifunktional eingesetzt werden, wobei die Widerstandskräfte gesteuert eingestellt werden können, um dem vorgesehenen Anwendungsfall gerecht zu werden.

Auch ist es zweckmäßig, wenn dynamische Widerstandskräfte und/oder statische Widerstandskräfte verursacht werden, um dynamische Betätigungskräfte und/oder statische Betätigungskräfte zu verursachen. Damit kann die Einwirkung auf den Betätigungshebel sowohl im statischen als auch im dynamischen Fall gesteuert werden, indem statische und dynamische Widerstandskräfte gesteuert werden können. Dadurch besteht die Möglichkeit, dass beispielsweise bei einem Betätigungshebel als Schalthebel die Schaltung einer manuellen Schaltung angenähert werden kann.

Auch ist es zweckmäßig, wenn die statischen Widerstandskräfte und/oder die dynamischen Widerstandskräfte für eine laterale Verlagerbarkeit und/oder für eine transversale Verlagerbarkeit des Betätigungshebels vorgebbar sind. Damit kann die Einwirkung auf den Betätigungshebel sowohl im statischen als auch im dynamischen Fall sowohl lateral als auch transversal gesteuert werden, indem statische und dynamische Widerstandskräfte sowohl lateral als auch transversal gesteuert werden können, wenn dies gewünscht ist. Dadurch besteht die Möglichkeit, dass beispielsweise bei einem Betätigungshebel als Schalthebel die Schaltung einer manuellen Schaltung angenähert werden kann.

Besonders vorteilhaft ist es, wenn die statischen Widerstandskräfte und/oder die dynamischen Widerstandskräfte als Kraft-Weg-Kennlinien definiert und vorgegeben sind. Diese Kennlinien lassen sich gezielt gestalten, abspeichern und die Steuerung danach ausrichten.

Auch ist es vorteilhaft, wenn verschiedene Kraft-Weg-Kennlinien definiert sind und ansteuerbar sind. So kann beispielsweise die sogenannte "Knackigkeit" der Betätigung als auch die allgemein benötigte Betätigungskraft gesteuert werden, beispielsweise in unterschiedlichen Profilen, wie beispielsweise die Profile "Normal", "Sport", etc., die auswählbar sein können.

Auch ist es zweckmäßig, wenn fahrerseitig eine Auswahl von Kraft-Weg-Kennlinien auswählbar sind, um die Betätigungscharakteristik des Betätigungshebels auszuwählen. So kann beispielsweise die sogenannte "Knackigkeit" der Betätigung als auch die allgemein benötigte Betätigungskraft gesteuert werden, beispielsweise in unterschiedlichen Profilen, wie beispielsweise die Profile "Normal", "Sport", etc., die auswählbar sein können.

Die Aufgabe zu dem Handbetätigungsaktuator wird mit den Merkmalen von Anspruch 8 gelöst.

Ein Ausführungsbeispiel der Erfindung betrifft einen Handbetätigungsaktuator, insbesondere eines Kraftfahrzeugs, mit einem Aktuatorgehäuse und mit einem Betätigungshebel, wobei der Betätigungshebel in dem Aktuatorgehäuse verschwenkbar gelagert angeordnet ist, wobei in dem Aktuatorgehäuse zumindest ein Kinematikmodul angeordnet ist, welches sich einerseits an dem Betätigungshebel abstützt und sich andererseits an dem Aktuatorgehäuse abstützt, um die räumliche Verlagerbarkeit des Betätigungshebels vorzugeben und die die Betätigungskraft zur Verlagerung des Betätigungshebels definierenden Widerstandskräfte zu verursachen, wobei zumindest ein Kinematikmodul oder mehrere Kinematikmodule anpassbar und/oder elektronisch steuerbar ist oder sind, insbesondere zur Durchführung des erfindungsgemäßen Verfahrens.

Besonders vorteilhaft ist es auch, wenn zumindest ein Kinematikmodul oder dass mehrere Kinematikmodule aus der Gruppe der nachfolgenden Kinematikmodule vorgesehen sind: Rastierungsprofil, mechanische Sperre, Gabelsperre, Walzensperre, Bolzensperre, aktive Aktuatoren, elektromechanische Aktuatoren, reaktive Aktuatoren, magnetorheologische Aktuatoren, Feder-Dämpferelement, Federelement, Dämpferelement, etc. Solche Kinematikmodule lassen sich derart konfigurieren und bedarfsweise steuern, dass die gewünschten Widerstandskräfte resultieren.

Bei einem vorteilhaften Ausführungsbeispiel ist es auch zweckmäßig, wenn zumindest ein Bedienelement vorgesehen ist, mittels welchem die Kraft-Weg-Kennlinien umschaltbar sind. Damit kann der Fahrer oder Bediener auswählen, welche Kennlinien und welche damit verknüpften Widerstandskräfte angesteuert und genutzt werden sollen.

Im Folgenden wird die Erfindung anhand eines Ausführungsbeispiels unter Bezugnahme auf die Zeichnungen detailliert erläutert. In den Zeichnungen zeigen:
- Fig. 1: eine schematische Darstellung eines Ausführungsbeispiels eines Handbetätigungsaktuators mit einem Betätigungshebel,
- Fig. 2: ein Diagramm mit einem Verlauf einer Widerstandskraft bei einem 1-2-Gangwechsel,
- Fig. 3: ein Diagramm mit einem Verlauf einer Widerstandskraft bei einem 2-1-Gangwechsel, und
- Fig. 4: ein Diagramm mit einem Verlauf einer Widerstandskraft in Querrichtung der Verlagerung des Betätigungshebels.

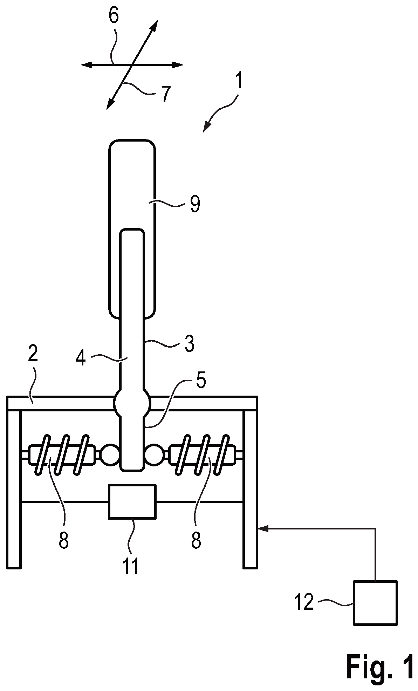

Die Figur 1 zeigt in einer schematischen Darstellung ein Ausführungsbeispiel eines Handbetätigungsaktuators 1, insbesondere für ein Kraftfahrzeug.

Der Handbetätigungsaktuator 1 weist ein Aktuatorgehäuse 2 und einen Betätigungshebel 3 auf, der in dem Aktuatorgehäuse 2 verlagerbar gelagert angeordnet ist.

Der Betätigungshebel 3 weist einen ersten Hebelarmbereichbereich 4 und einen zweiten Hebelarmbereichbereich 5 auf.

Der Betätigungshebel 3 ist in dem Aktuatorgehäuse 2 derart verschwenkbar gelagert angeordnet, dass der erste Hebelarmbereichbereich 4 von dem Aktuatorgehäuse 2 nach außen, typischerweise nach oben, abragt und der zweite Hebelarmbereichbereich 5 in das Aktuatorgehäuse 2 hineinragt.

Bei einer Verlagerung des Betätigungshebels 3 kann der Betätigungshebel 3 im Aktuatorgehäuse 2 lateral gemäß Richtung 7 als auch transversal gemäß Richtung 6 verlagert werden.

Die Verlagerbarkeit des Betätigungshebels 3 in dem Aktuatorgehäuse 2 ist je nach Ausführungsbeispiel definiert. Diese jeweilige Definition der Verlagerbarkeit wird dadurch erreicht, dass in dem Aktuatorgehäuse 2 zumindest ein Kinematikmodul 8 angeordnet ist, welches sich einerseits an dem zweiten Hebelarmbereichbereich 5 abstützt und sich andererseits an dem Aktuatorgehäuse 2 abstützt, um die räumliche Verlagerbarkeit des Betätigungshebels 3 vorzugeben und die Betätigungskraft zur Verlagerung des Betätigungshebels 3 zu definieren. Mit dem Kinematikmodul 8 oder mit den Kinematikmodulen 8 wird die Widerstandskraft vorgegeben, welche aufgewendet werden muss und der Betätigungskraft bei der Betätigung entspricht.

Als Kinematikmodul 8 kann im einfachsten Fall eine Federdämpfereinheit oder eine Rastierungseinheit etc. verstanden werden, welche den zulässigen Weg des Betätigungshebels 3 als auch die benötigte Betätigungskraft entlang des zulässigen Weges des Betätigungshebels 3 definiert. Auch Begrenzungselemente oder Kulissen etc. können als Kinematikmodule 8 verwendet werden. Auch können mehrere solcher Kinematikmodule 8 vorgesehen sein.

Dabei ist es bei einem Ausführungsbeispiel auch vorteilhaft, wenn zumindest ein Kinematikmodul 8 oder dass mehrere Kinematikmodule 8 aus der Gruppe der nachfolgenden Kinematikmodule 8 vorgesehen ist oder sind: Rastierungsprofil, mechanische Sperre, Gabelsperre, Walzensperre, Bolzensperre, aktive Aktuatoren, elektromechanische Aktuatoren, reaktive Aktuatoren, magnetorheologische Aktuatoren, Feder-Dämpferelement, Federelement, Dämpferelement, etc.

Erfindungsgemäß ist zumindest ein Kinematikmodul 8 oder sind mehrere Kinematikmodule 8 anpassbar und/oder elektronisch steuerbar. Damit kann erreicht werden, dass die Widerstandskraft zur Verlagerung des Betätigungshebels 3 veränderlich steuerbar ist.

Bevorzugt ist zumindest ein Bedienelement 12 vorgesehen, mittels welchem die Kraft-Weg-Kennlinien umschaltbar sind. Als Bedienelement 12 kann ein Taster, beispielsweise in der Mittelkonsole oder am Lenkrad, eine Schaltwippe am Lenkrad etc. vorgesehen sein.

Der Handbetätigungsaktuator 1 weist weiterhin zumindest einen Sensor 11 auf, welcher die Stellung des Betätigungshebels 3, und/oder seine Verstellung und/oder seine Betätigungsgeschwindigkeit detektiert. Das Signal des zumindest einen Sensors 11 kann an eine Steuereinheit weitergeleitet werden, um beispielsweise ein automatisches Getriebe manuell zu betätigen oder beispielsweise eine automatisiert betätigbare Bremse manuell zu betätigen.

In Figur 1 weist der Betätigungshebel 3 an seinem ersten Hebelarmbereichbereich 4 einen Betätigungsbereich und/oder ein Griffelement 9 auf, welches von einem Fahrer greifbar ist, um den Betätigungshebel 3 zu verlagern, zu verschwenken, zu ziehen und/oder zu drücken. Dieses Griffelement 9 ist langgestreckt und dünn ausgebildet, um gut mit der vollen Hand sicher und fest umgriffen werden zu können. Alternativ dazu kann statt des eher dünnen und langgestreckten Griffelements 9 auch ein Schaltknauf vorgesehen sein, wie er bei Schalthebeln bei Schaltgetrieben eher typisch ist. Der Schaltknauf ist dabei eher kurz in der axialen Länge und dicker im Durchmesser als das Griffelement 9.

In einem Ausführungsbeispiel eines Handbetätigungsaktuators 1 mit einem Betätigungshebel 3, welcher als Schalthebel dient, ist es vorteilhaft, wenn der Betätigungshebel 3 in einer H-Gassenstruktur transversal und lateral verlagerbar ist. Bei einer Verlagerung des Betätigungshebel 3 kann der Betätigungshebel 3 im Aktuatorgehäuse 2 lateral gemäß Richtung 7 und transversal und gemäß Richtung 6 verlagert werden.

Dabei ist der Betätigungshebel 3 bevorzugt multistabil verlagerbar angeordnet, wobei der Betätigungshebel 3 ausgehend von einer Neutralstellung N hin zu beispielsweisen Gangstellungen R, 1, 2, 3, 4, 5, 6, 7 entgegen einer Widerstandskraft verlagerbar ist.

Das erfindungsgemäße Verfahren zur Steuerung eines Handbetätigungsaktuators 1 eines Kraftfahrzeugs sieht vor, dass zumindest ein Kinematikmodul 8 angeordnet ist, welches sich einerseits an dem Betätigungshebel 3 abstützt und sich andererseits an dem Aktuatorgehäuse 2 abstützt, um die räumliche Verlagerbarkeit des Betätigungshebels 3 vorzugeben und die die Betätigungskraft zur Verlagerung des Betätigungshebels 3 definierenden Widerstandskräfte zu verursachen, wobei zumindest ein Kinematikmodul 8 anpassbar und/oder elektronisch steuerbar ist. Damit kann durch die Anpassung und/oder Steuerung die Widerstandskraft oder können die Widerstandskräfte wunschgemäß angepasst oder eingestellt werden.

Dabei können sowohl dynamische Widerstandskräfte und/oder statische Widerstandskräfte verursacht werden, um dynamische Betätigungskräfte und/oder statische Betätigungskräfte zu verursachen.

Auch können die statischen Widerstandskräfte und/oder die dynamischen Widerstandskräfte für eine laterale Verlagerbarkeit und/oder für eine transversale Verlagerbarkeit des Betätigungshebels 3 vorgegeben werden.

Gemäß eines Gedankens der Erfinder ist es besonders vorteilhaft, wenn die statischen Widerstandskräfte und/oder die dynamischen Widerstandskräfte als Kraft-Weg-Kennlinien definiert und vorgegeben sind. Damit können Kraft-Weg-Kennlinien definiert werden, die angesteuert werden, um die gewünschten Widerstandskräfte einstellen und vorgeben zu können.

Besonders vorteilhaft ist es, wenn verschiedene Kraft-Weg-Kennlinien definiert sind und ansteuerbar sind. Diese verschiedenen Kraft-Weg-Kennlinien können auch beispielsweise in verschiedenen Profilen einstellbar sein, wobei solche Profile vom Fahrer oder Bediener auswählbar sind.

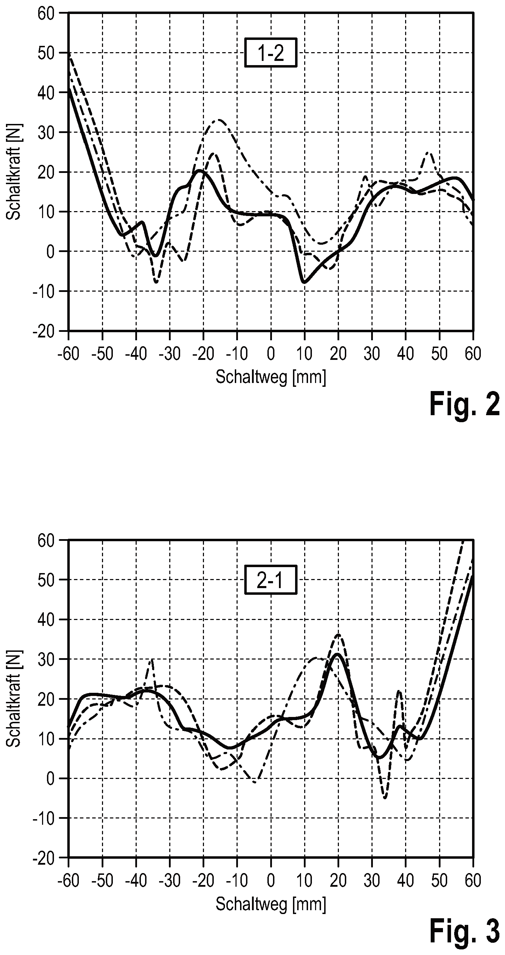

Die Figuren 2 bis 4 zeigen Kraft-Weg-Kennlinien für verschiedene Betrachtungen.

Die Figur 2 zeigt verschiedene Kraft-Weg-Kennlinien für einen Schaltvorgang vom 1. Gang in den 2. Gang.

Die Figur 3 zeigt verschiedene Kraft-Weg-Kennlinien für einen Schaltvorgang vom 2. Gang in den 1. Gang.

Man erkennt, dass jeweils etwa zwei Maxima über den Weg vom 1. Gang zum 2. Gang durchlaufen werden, wobei in der Neutralposition etwa ein Nulldurchgang der Kraft vorliegt. Gleiches gilt auch für den 2-1-Gangwechsel gemäß Figur 3. Die Maxima sind jeweils jedoch unterschiedlich stark ausgeprägt.

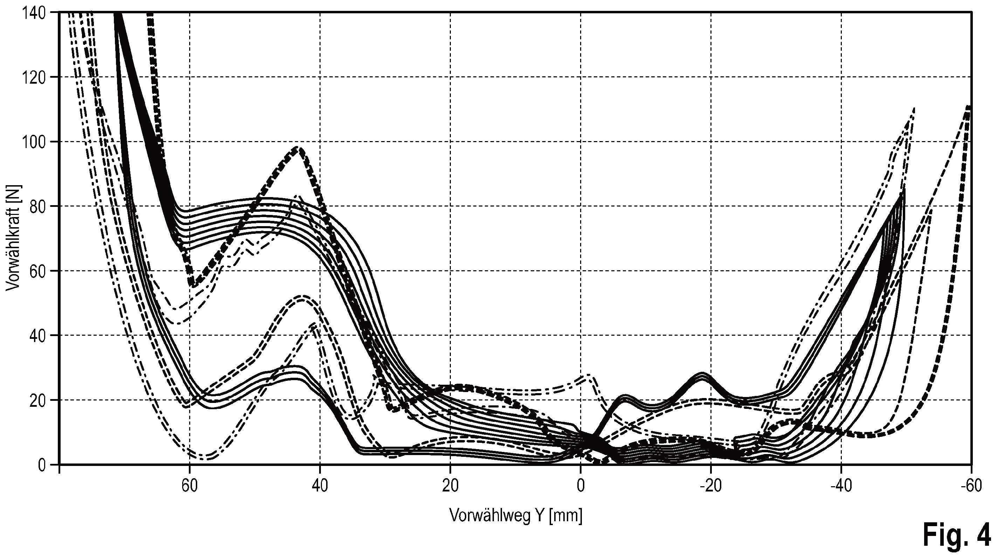

Die Figur 4 zeigt die wirkende Kraft bei einer lateralen Bewegung des Wählhebels, wobei auch wiederum mehrere Kraft-Weg-Kennlinien mit unterschiedlich ausgeprägtem Kraftverlauf zu erkennen sind.

Gemäß einem Gedanken der Erfinder ist fahrerseitig eine Auswahl von Kraft-Weg-Kennlinien auswählbar, um die Betätigungscharakteristik des Betätigungshebels 3 auszuwählen. Hierzu ist beispielsweise zumindest ein Bedienelement 12 vorgesehen, mittels welchem die Kraft-Weg-Kennlinien auswählbar und umschaltbar sind.

### Bezugszeichenliste

- 1: Handbetätigungsaktuator
- 2: Aktuatorgehäuse
- 3: Betätigungshebel
- 4: erster Hebelarmbereichbereich
- 5: zweiter Hebelarmbereichbereich
- 6: transversale Richtung
- 7: laterale Richtung
- 8: Kinematikmodul
- 9: Griffelement
- 11: Sensor
- 12: Bedienelement

## Patentansprüche

1. Verfahren zur Steuerung eines Handbetätigungsaktuators (1) eines Kraftfahrzeugs, wobei der Handbetätigungsaktuator (1) ein Aktuatorgehäuse (2) und einen Betätigungshebel (3) aufweist, wobei der Betätigungshebel (3) in dem Aktuatorgehäuse (2) verschwenkbar gelagert angeordnet ist, wobei in dem Aktuatorgehäuse (2) zumindest ein Kinematikmodul (8) angeordnet ist, welches sich einerseits an dem Betätigungshebel (3) abstützt und sich andererseits an dem Aktuatorgehäuse (2) abstützt, um die räumliche Verlagerbarkeit des Betätigungshebels (3) vorzugeben und die die Betätigungskraft zur Verlagerung des Betätigungshebels (3) definierenden Widerstandskräfte zu verursachen, wobei zumindest ein Kinematikmodul (8) anpassbar und/oder elektronisch steuerbar ist.

2. Verfahren nach Anspruch 1, **dadurch gekennzeichnet, dass** das zumindest eine Kinematikmodul (8) oder dass mehrere Kinematikmodule (8) derart angeordnet und ausgebildet sind, dass der Betätigungshebel (3) als Schalthebel und/oder als Wählhebel und/oder als Bremsbetätigungshebel (3) dient, wobei die zur Verlagerung des Betätigungshebels (3) notwendigen Betätigungskräfte durch erzeugte Widerstandskräfte verursacht werden und/oder die räumliche Verlagerbarkeit vorgegeben wird.

3. Verfahren nach Anspruch 1 oder 2, **dadurch gekennzeichnet, dass** dynamische Widerstandskräfte und/oder statische Widerstandskräfte verursacht werden, um dynamische Betätigungskräfte und/oder statische Betätigungskräfte zu verursachen.

4. Verfahren nach Anspruch 3, **dadurch gekennzeichnet, dass** die statischen Widerstandskräfte und/oder die dynamischen Widerstandskräfte für eine laterale Verlagerbarkeit und/oder für eine transversale Verlagerbarkeit des Betätigungshebels (3) vorgebbar sind.

5. Verfahren nach Anspruch 1, 2, 3 oder 4, **dadurch gekennzeichnet, dass** die statischen Widerstandskräfte und/oder die dynamischen Widerstandskräfte als Kraft-Weg-Kennlinien definiert und vorgegeben sind.

6. Verfahren nach Anspruch 5, **dadurch gekennzeichnet, dass** verschiedene Kraft-Weg-Kennlinien definiert sind und ansteuerbar sind.

7. Verfahren nach einem der vorhergehenden Ansprüche, **dadurch gekennzeichnet, dass** fahrerseitig eine Auswahl von Kraft-Weg-Kennlinien auswählbar sind, um die Betätigungscharakteristik des Betätigungshebels (3) auszuwählen.

8. Handbetätigungsaktuator (1), insbesondere eines Kraftfahrzeugs, mit einem Aktuatorgehäuse (2) und mit einem Betätigungshebel (3), wobei der Betätigungshebel (3) in dem Aktuatorgehäuse (2) verschwenkbar gelagert angeordnet ist, wobei in dem Aktuatorgehäuse (2) zumindest ein Kinematikmodul (8) angeordnet ist, welches sich einerseits an dem Betätigungshebel (3) abstützt und sich andererseits an dem Aktuatorgehäuse (2) abstützt, um die räumliche Verlagerbarkeit des Betätigungshebels (3) vorzugeben und die die Betätigungskraft zur Verlagerung des Betätigungshebels (3) definierenden Widerstandskräfte zu verursachen, wobei zumindest ein Kinematikmodul (8) oder mehrere Kinematikmodule (8) anpassbar und/oder elektronisch steuerbar ist oder sind, insbesondere zur Durchführung eines Verfahrens nach einem der vorhergehenden Ansprüche.

9. Handbetätigungsaktuator (1) nach Anspruch 8, **dadurch gekennzeichnet, dass** zumindest ein Kinematikmodul (8) oder dass mehrere Kinematikmodule (8) aus der Gruppe der nachfolgenden Kinematikmodule (8) vorgesehen sind: Rastierungsprofil, mechanische Sperre, Gabelsperre, Walzensperre, Bolzensperre, aktive Aktuatoren, elektromechanische Aktuatoren, reaktive Aktuatoren, magnetorheologische Aktuatoren, Feder-Dämpferelement, Federelement, Dämpferelement, etc.

10. Handbetätigungsaktuator (1) nach Anspruch 8 oder 9, **dadurch gekennzeichnet, dass** zumindest ein Bedienelement (12) vorgesehen ist, mittels welchem die Kraft-Weg-Kennlinien umschaltbar sind.
